# EUROPÄISCHE PATENTSCHRIFT

(11) **EP 2 057 031 B1**
(45) Veröffentlichungstag und Bekanntmachung des Hinweises auf die Patenterteilung: **27.06.2012**
(21) Anmeldenummer: 07765064.6
(22) Anmeldetag: 05.07.2007
(51) Int. Cl.: B60K 37/06

(54) **BEDIENVORRICHTUNG FÜR ANHÄNGEFAHRZEUGE**
OPERATING DEVICE FOR TRAILER VEHICLES
DISPOSITIF DE COMMANDE POUR REMORQUES

(30) Priorität: 24.08.2006 DE 102006039765
(43) Veröffentlichungstag der Anmeldung: 13.05.2009
(73) Patentinhaber: WABCO GmbH, 30453 Hannover (DE)
(72) Erfinder: RISSE, Rainer, 30982 Pattensen-Reden (DE); STENDER, Axel, 31787 Hamein (DE)
(74) Vertreter: Lauerwald, Jörg
(86) Internationale Anmeldenummer: PCT/EP2007/005941
(87) Internationale Veröffentlichungsnummer: WO 2008/022666

(56) Entgegenhaltungen:
- DE-A1- 19 905 172
- DE-A1-102004 037 707
- GB-A- 2 390 347

## Beschreibung

Die Erfindung betrifft eine Bedienvorrichtung für Anhängerfahrzeuge, Insbesondere eine Bedienvorrichtung für elektronische Steuergeräte von Anhängerfahrzeugen.

Anhängerfahrzeuge (Trailer) besitzen heutzutage vielfältige technische Betriebsfunktionen, welche mittels Bedienteilen gesteuert werden. Die zu steuernden Funktionen können unter anderem ein elektronisches Bremssystem (EBS), eine zentrale Anhängerelektronik (Trailer Central Electronic (TCE)) oder die elektronische Luftfederung im Trailer (Electronically Controlled Air Suspension System (ECAS)) und vieles mehr sein. Im Rahmen der genannten Betriebsfunktionen sind jeweils zahlreiche Steuerungsfunktionen auszuführen.

Bisher wurden zur Anzeige und zur Steuerung unterschledlicher Betriebsfunktionen verschiedene individuelle Elemente, wie zum Beispiel Schalter, Lampen, bistablle Kippelemente und einfache Displays, eingesetzt. Die vielen unterschledlichen Elemente verursachen hohe Kosten, da für jedes dieser Elemente ein separates Gehäuse sowie Leitungen und Stecker vorgehalten werden müssen.

Häufig ist z.B. einem Schalter eine einzige, bestimmte Steuerfunktion zugeordnet, wie z.B. in DE 10 2004 037 707 A1 beschrieben. Um die Übersichtlichkeit und damit die Bedienbarkeit zu erleichtern, werden die bekannten Bedienteile auf eine spezifische Betriebs- oder Steuerfunktion begrenzt. Daher können die bekannten Bedienteile nur eingeschränkt an veränderte Steuerungsaufgaben angepasst werden. Zudem wird bei herkömmlichen Bedienteilen ein Zuwachs an Komplexität vermieden, um Personen ohne Vorkenntnisse den Einstieg In die Bedienung zu erleichtern. Trotzdem bieten herkömmliche Bedientelle eine eher geringe intuitive erlernbare Bedienbarkeit. Um die Funktion der auf dem Bedientell angeordneten Bedienelemente (Tasten etc.) zu verstehen, sind in der Regel Schulungen erforderlich, die bel Änderungen der Steuerelektronik oder bei verschleden ausgestatteten Trailern regelmäßig erneut durchzuführen sind.

Zusätzlich zur Steuerung von Betriebsfunktionen sind bei Anhängerfahrzeugen bestimmte Funktionen und Betriebsparameter zu überwachen, um einen erhöhten Fahrkomfort oder eine erhöhte Sicherheit zu bieten. Hierzu gehört beispielsweise eine Überwachung der Reifendrücke, des Kilometerstandes oder der Abnutzung der Bremsbeläge. Werden Fehler oder Abweichungen festgestellt, führt dies üblicherweise zum Aufleuchten einer Signallampe, wobei ein Fehler zu Diagnosezwecken dauerhaft in der Steuerelektronik gespeichert werden kann. Die Anzeige von Betriebsdaten der zu überwachenden Betriebsparameter erfolgt auf separaten Anzeigevorrichtungen, die räumlich von den zur Steuerung eingesetzten Bedienteilen getrennt sind.

Es ist eine Aufgabe der vorliegenden Erfindung, ein universelles Bedienteil bereitzustellen, welches eine intuitive und flexible Steuerung und Überwachung von Steuerungsfunktionen und Betriebsparametern eines Anhängerfahrzeuges ermöglicht.

Die Aufgabe wird erfindungsgemäß durch eine Bedienvorrichtung für Anhängerfahrzeuge mit einem Bedienelement zum Ausführen (z.B. Aktivieren und/oder Steuern) einer Steuerfunktion des Anhängerfahrzeuges gelöst, wobei die Bedienvorrichtung eine Anzeige zum Anzeigen von Steuerinformation aufweist. Die Steuerinformation bezieht sich auf die Steuerfunktion bzw. korrespondiert mit der Steuerfunktion. Die Steuerinformation beinhaltet vorteilhaft auch die zur Betriebsfunktion gehörenden Steuerdaten. Um die Steuerfunktionen bzw. Betriebsfunktionen mittels der Bedienvorrichtung ausführen zu können, sind entsprechende Steuerungsvorrichtungen im Anhängerfahrzeug vorgesehen. Im Unterschied zu herkömmlichen Bedienvorrichtungen sind erfindungsgemäß nicht nur Bedienelemente für Steuerungsaufgaben vorgesehen. Zusätzlich werden auch zugehörige Daten und Informationen, die zur Steuerung erforderlich sind, auf einer Anzeige angezeigt. Hierdurch ist es möglich, ein universelles Bedienteil bereitzustellen, welches auf verschiedene Steuer- und Überwachungsfunktionen flexibel anpassbar ist und eine zentrale Überwachung wichtiger Funktionen und Daten ermöglicht. Entsprechend den angezeigten Werten kann unmittelbar auf einzustellende Parameter oder Fehlfunktionen reagiert werden. Die Bedienoberfläche kann nunmehr immer gleich gestaltet sein und die Anzeige kann intuitiv und interaktiv auf die verschiedenen Funktionen hinweisen. Im Gegensatz zu den herkömmlichen Bedienteilen wird erfindungsgemäß also gerade die technische Komplexität der Bedienvorrichtung erhöht, um die Bedienung zu vereinfachen.

Gemäß einer vorteilhaften Weiterbildung der Erfindung ist vorgesehen, dass durch die erfindungsgemäßen Bedienvorrichtung mindestens zwei unterschiedliche Steuerfunktionen ausführbar sind, wobei die Anzeige eine zu der jeweiligen Steuerfunktion korrespondierende Steuerinformation anzeigt. Vorteilhaft ist die Bedienvorrichtung also mit einer Art Multifunktionsanzeige ausgestattet, so dass die auf der Bedienvorrichtung angeordneten Bedienelemente je nach Betriebsmodus unterschiedliche Funktionen ausführen. Dies ermöglicht eine besonders einfache und intuitive Bedienung sowie eine flexible Anpassbarkeit der Bedienvorrichtung auf verschiedene Anforderungen. Bei einer vorteilhaften Ausgestaltung gehören die Steuerfunktionen zu einer einzigen Betriebsfunktion, wie zum Beispiel zur elektronischen Niveauregelung des Anhängerfahrzeugs. Bei einer anderen vorteilhaften Ausgestaltung gehören die Steuerfunktionen zu unterschiedlichen Betriebsfunktionen des Anhängerfahrzeuges. So wird mit einer ersten Steuerfunktion zum Beispiel eine manuelle Steuerung der Position einer verbauten Liftachse des Anhängerfahrzeugs ausgeführt und mit einer zweiten Steuerfunktion zu einem anderen Zeitpunkt eine Steuerung einer Straßenfertigerbremse des Anhängerfahrzeugs bewirkt. Derartige unterschiedliche Steuerfunktionen sind demnach vorteilhaft in einer erfindungsgemäßen Bedienvorrichtung vorgesehen.

Bei einer weiteren vorteilhaften Weiterbildung der Bedienvorrichtung ist ein Bedienelement (z.B. ein Taster o.ä.) ausgestaltet, um bei Betätigung basierend auf der auf der Anzeige angezeigten Steuerinformation mindestens zwei verschiedene Steuerfunktionen auszuführen. Die Steuerfunktionen können zum gleichen oder auch zu verschiedenen Betriebsmodi bzw. Betriebsfunktionen gehören. Erfindungsgemäß sind die Bedienelemente demnach variabel definierbar, zum Beispiel über eine Einstellung in der Betriebssoftware der Steuerelektronik der Bedienvorrichtung. Dadurch kann die erforderliche Flexibilität und technische Vielseitigkeit trotz einfacher intuitiver Bedienbarkeit erreicht werden. Die Anzeige und die Bedienelemente sind vortellhaft so angeordnet und eingerichtet, dass unmittelbar zu erkennen ist, welche Funktion das Bedienelement bei Betätigung aktiviert bzw. steuert.

In einer vorteilhaften Ausgestaltung der vorliegenden Erfindung weist die Bedienvorrichtung weniger als zehn Bedienelemente auf. Dadurch wird die Übersichtlichkeit der Bedienvorrichtung erhöht und das Erlernen der Bedienung vereinfacht. Wenn nur drei Bedienelemente vorliegen, ergibt sich eine besonders intuitive Funktionalität, welche gerade ausreicht, um die meisten im Trailerbereich erforderlichen Funktionen menügesteuert durchzuführen, aber trotzdem sehr einfach ist.

Gemäß einer weiteren vorteilhaften Weiterbildung der Erfindung sind die ausführbaren Steuerfunktionen basierend auf mit der Bedienvorrichtung gekoppelten Steuerungsvorrichtungen des Anhängerfahrzeuges konfigurierbar. Das bedeutet, dass die erfindungsgemäße Bedienvorrichtung vorteilhaft nur die Steuerfunktionen anbietet bzw. darstellt, welche auch in dem angeschlossenen Anhängerfahrzeug vorhanden sind. Dadurch wird die Bedienung vereinfacht, obwohl die Bedienvorrichtung grundsätzlich die Möglichkeit hat, auch zahlreiche verschiedene Steuerfunktionen anzubieten, wenn ein Anhänger über eine Vielzahl von Steuerungsmöglichkeiten verfügt. Möglich wird dies zum Beispiel durch eine automatische Abfrage oder durch eine Übermittlung von Systemparametern, welche die jeweilige Konfiguration des Anhängerfahrzeuges beinhalten. Die Einstellung oder auch Programmierung der Bedienvorrichtung für den jeweiligen Anwendungsfall kann über ein elektronisches Bussystem erfolgen, an welches die Bedienvorrichtung angeschlossen wird. Über den Bus werden die Betriebsparameter beispielsweise bei der Initialisierung geladen.

Gemäß einem Aspekt der Erfindung ist die Anzeige der Bedienvorrichtung zum Anzeigen von Betriebsdaten ausgestaltet, welche der Überwachung von Betriebsparametern zugeordnet sind. Demnach ist die Anzeige zusätzlich zum Anzeigen von Daten oder Informationen ausgestaltet, welche gerade keiner Steuerfunktion des Anhängerfahrzeuges entsprechen, sondern nur der Überwachung von Betriebsparametern dienen. Dadurch werden zusätzlich zu den Steueraufgaben auch Überwachungs- und Diagnosefunktionen bereitgestellt, die nicht mit der Steuerung unmittelbar im Zusammenhang stehen. So kann beispielsweise neben der Niveauregelung als Steuerungsaufgabe eine Bremsbelagsverschleißanzeige vorgesehen sein. Dadurch werden Überwachungs- und Steuerungsaufgaben kompakt und komfortabel in einem Gerät bereitgestellt, was die Komplexität und die Kosten der gesamten Ausstattung senkt.

Als weitere Betriebsdaten können beispielsweise der Kilometerstand des Anhängerfahrzeuges, Reifendruckinformationen und/oder die Daten eines allgemeinen Betriebsdatenspeichers (Operating Data Recorder) auf der die Anzeige der Bedienvorrichtung angezeigt werden.

Gemäß einem Aspekt der Erfindung weist die Bedienvorrichtung einen Speicher auf, in dem Daten, wie z.B. die in dem allgemeinen Betriebsdatenspeicher enthaltenen Daten, speicherbar sind.

Vorteilhaft sind bei der Bedienvorrichtung eine oder mehrere der nachfolgenden Funktionen vorgesehen: Eine elektronische Niveauregelung des Anhängerfahrzeugs, eine manuelle Steuerung der Position einer verbauten Liftachse des Anhängerfahrzeugs, eine Steuerung einer Straßenfertigerbremse des Anhängerfahrzeugs und eine Steuerung von Schaltausgängen zur Beleuchtung, insbesondere zur Innenraumbeleuchtung des Anhängerfahrzeugs. Die erfindungsgemäße Bedienvorrichtung lässt sich insbesondere auf die genannten Fälle flexibel einstellen und bietet die jeweils erforderliche Anzeige und entsprechenden Bedienelemente.

Eine Straßenfertigerbremse dient zum Einbremsen von Kippmulden-Fahrzeugen beim Betrieb hinter den Straßenfertigem. Das Kippmulden-Fahrzeug mit dem Teer wird vom Fertiger vorwärts geschoben. Um ein Wegrollen des Fahrzeugs zu verhindern, wird dieses leicht eingebremst. Der Bremsdruck ist parametrierbar. Zur Aktivierung der entsprechenden Steuerfunktion muss ein separater Taster betätigt werden, die Geschwindigkeit muss geringer als 10 km/h sein und die Kippmulde muss angehoben sein. Hierfür ist ein Endschalter an der Kippmulde vorgesehen. Die Funktion wird über den separaten Taster und bei einer Geschwindigkeit von mehr als 10 km/h wieder deaktiviert. Für diese Funktion wird nur ein digitaler Eingang benötigt, da der separate Taster und der Endschalter in Reihe liegen. Gemäß einer vorteilhaften Ausgestaltung sind die vorgenannten Steuerungsfunktionen bei der erfindungsgemäßen Bedienvorrichtung vorgesehen.

Die Aufgabe wird ebenfalls durch ein Verfahren zum Bedienen eines Anhängerfahrzeugs gelöst. Dieses Verfahren beinhaltet die Schritte: Anzeigen von Steuerinformation und Zuordnen einer zur Steuerinformation korrespondierenden Steuerfunktion des Anhängerfahrzeuges zu einem Bedienelement. Das Anzeigen erfolgt vorteilhaft auf der Anzeige der Bedienvorrichtung, woraufhin die Bedienelemente zum Ausführen der entsprechenden Steuerfunktion konfiguriert sind. Die Betätigung des Bedienelementes aktiviert dann die Steuerfunktion, oder wechselt zu einem bestimmten Menüpunkt um Betriebsdaten anzuzeigen. Das erfindungsgemäße Verfahren sieht demnach vor, dass entsprechend der dargestellten Steuerinformation einem Bedienelement eine Steuerfunktion zugeordnet wird. Die Steuerinformation gibt an, welche Betriebsfunktion bzw. Steuerfunktion innerhalb einer Betriebsfunktion mittels des Bedienelementes anwählbar und ausführbar ist. Die Steuerinformation kann aber auch Daten wiedergeben, die zur Steuerung benötigt werden. Gemäß einer vorteilhaften Ausgestaltung der vorliegenden Erfindung sieht das Verfahren weiter die folgenden Schritte vor: Betätigen eines Bedienelements zum Ausführen einer ersten Steuerfunktion basierend auf einer ersten angezeigten Steuerinformation und das Betätigen des (selben) Bedienelements zum Ausführen einer zweiten Steuerfunktion basierend auf einer zweiten angezeigten Steuerinformation, wobei die erste Steuerfunktion und die zweite Steuerfunktion verschieden sind. Durch diese Schritte ist es möglich ein Bedienelement für verschiedene Steuerungsfunktionen im Rahmen einer Betriebsfunktion oder auch innerhalb verschiedener Betriebsfunktionen unterschiedlich zu belegen. Zunächst wird ein Bedienelement basierend auf der Anzeige einer ersten Steuerinformation zum Ausführen einer ersten Steuerfunktion genutzt. Sodann wird das gleiche Bedienelement, sobald eine zweite Steuerinformation angezeigt wird, zum Ausführen einer zweiten Steuerfunktion eingesetzt. So kann ein Bedienelement vorteilhaft für mehrere Steuerfunktionen eingesetzt werden, wobei die information hierüber von der Anzeige vermittelt wird. Dies reduziert den Einarbeitungsaufwand, da ein wesentlicher Teil der Information, der zur Bedienung notwendig ist, unmittelbar über die Anzeige vermittelt wird.

Einige Ausführungsbeispiele der vorliegenden Erfindung werden nun anhand der folgenden Figuren beispielhaft beschrieben. Es zeigt
- Fig. 1: eine vereinfachte Darstellung einer Anwendung mit einem herkömmlichen Bedienteil zur Niveauregelung,
- Fig. 2: eine frontale Ansicht einer erfindungsgemäßen Anzeige- und Bedienvorrichtung,
- Fig. 3: beispielhafte Wiedergaben erfindungsgemäßer Menüs,
- Fig. 4: eine mögliche Ausgestaltung eines erfindungsgemäßen Bedienteils.

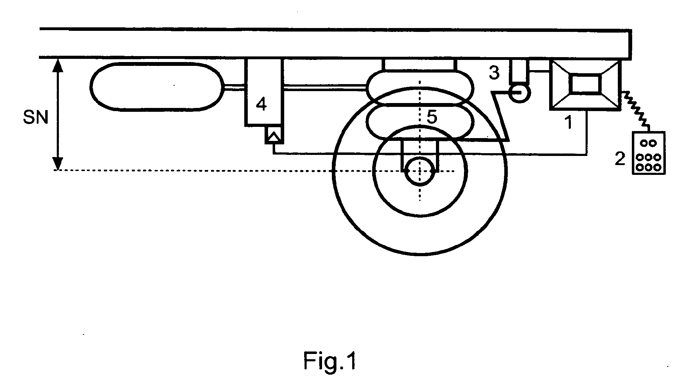

Fig.1 zeigt eine vereinfachte Darstellung einer herkömmlichen Anwendung eines Bedienteils 2 zur Niveauregelung. Hierbei erfasst ein Wegsensor 3 laufend die Höhenlage des Fahrzeugs und übermittelt die Messwerte der Elektronik 1. Erkennt die Elektronik nach Auswertung der Signale eine Abweichung vom Sollniveau SN, wird ein Magnetventil 4 so angesteuert, dass durch Be- oder Entlüften die notwendige Niveauänderung erreicht wird. Über die Bedieneinheit 2 kann der Bediener unterhalb einer vorgegebenen Geschwindigkeitsschwelle (im Stand) das Sollniveau SN verändern. Dies ist zum Beispiel für den Rampenbetrieb von Bedeutung. Über eine Signallampe wird ein Niveau außerhalb des für den Fahrbetrieb vorgeschriebenen Niveaus (Normalniveau) angezeigt. Ein Blinken dieser Lampe meldet einen von der Elektronik festgestellten Fehler des Systems.

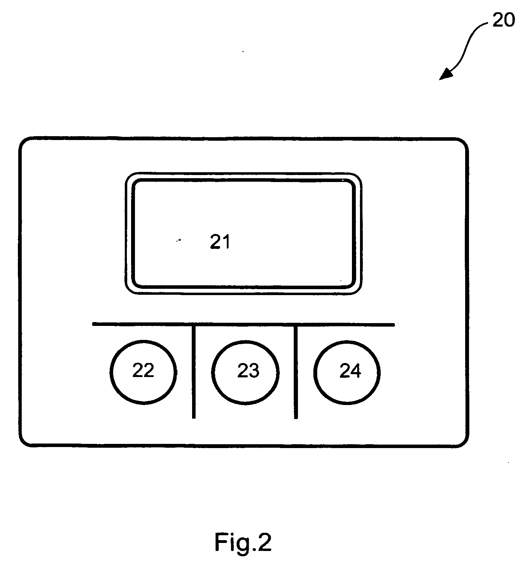

Fig. 2 zeigt eine erfindungsgemäße Bedienvorrichtung 20 in frontaler Aufsicht. Bei der erfindungsgemäßen Bedienvorrichtung 20 ist demnach eine Anzeige 21 vorgesehen, um die unterschiedlichen Funktionen und Betriebsmodi der erfindungsgemäßen Bedienvorrichtung 20 darzustellen. Die Anzeige kann zum Beispiel als Flüssigkristallanzeige oder auch als irgendeine andere Art eines Displays ausgeführt sein. Es Ist auch vorteilhaft, ein Matrixdisplay zu verwenden. Der Nutzer erfährt mittels der Anzeige 21, In welchem Betriebsmodus er sich befindet und welche Funktionen ihm entsprechend zur Verfügung stehen. Die Bedienelemente 22, 23 und 24 können bei Betätigung (z.B. Berührung oder Drücken o.ä.) variable oder fest vorgegebene Funktionen ausführen, wie z. B. das Eintreten In ein Menü oder das Zurückkehren aus einem tieferen Menüpunkt zu einem höheren Menüpunkt. Ebenso können die Bedienelemente dazu dienen Steuerfunktionen zu veranlassen, wie z.B. die Innenbeleuchtung In einem Anhänger einzuschalten, oder das Sollniveau bei der Niveauregelung einzustellen. Die erfindungsgemäße Vorrichtung ist dabei vorteilhaft besonders einfach gehalten, um die Bedienung ohne aufwendige zusätzliche Schulung des Bedienpersonals (z. B. die Fahrer von Kraftfahrzeugen) vornehmen zu können. Daher ist vorgesehen, dass die Bedienung menügesteuert ist und sich der Nutzer mittels weniger Bedienelemente (z. B. 10 Tasten oder weniger), durch das auf der Anzeige 21 dargestellte Menü bewegt. In einer weiteren vorteilhaften Ausgestaltung sind z.B. nur drei Bedienelemente 22, 23 und 24 vorgesehen. Andererseits können jedoch bestimmte, immer wiederkehrende Grundfunktionen unmittelbar mit einem der Bedienelementen 22, 23 oder 24 verknüpft sein.

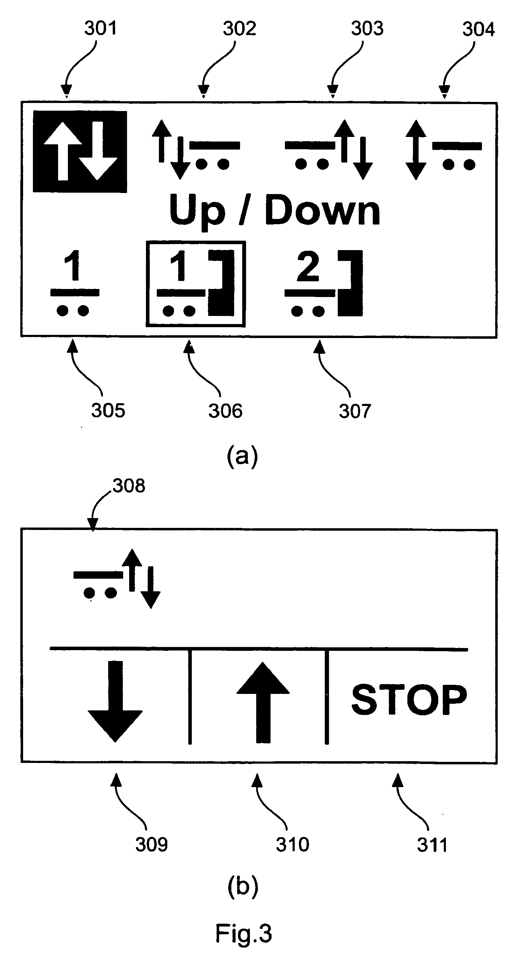

Fig.3 zeigt beispielhaft zwel erfindungsgemäße Menüs In Fig. 3 (a) und Fig. 3 (b), wie sie auf der Anzeige 21 gemäß Fig. 2 dargestellt werden können. Diese Menüs können z.B. zur automatischen Niveauregelung von luftgefederten Nutzfahrzeugen eingesetzt werden. Über eine erfindungsgemäße Bedieneinheit 20 können die Einstellungen der Niveauregelungen gezielt geändert werden, wobei die Funktionen auf der Anzeige 21 beispielsweise In der in Fig. 3 dargestellten Form angezeigt werden. Nach Abschluss der Änderung wird das Niveau als neues Sollniveau gespeichert. Daneben übernimmt die automatische Niveauregelung auch noch andere Funktionen, wie die automatische obere und untere Höhenbegrenzung, eine Verbesserung der Querstabilität, Niveau- und Druckkontrolle, Fehlererkennung und -anzeige, Liftachsheben und -senken, Be- und Entlasten der Schleppachse, Anfahrhilfe, Nullpunktfeststellung bel Hub- oder Liftachse und Abspeicherung und Abrufen von frei wählbaren Niveaus mit der Bedieneinheit, welche alle eine entsprechende Darstellung auf der Anzeige 21 haben. Um diese Vielzahl von Funktionen zu ertüllen, kann sich die Anzeige 21 wie in Fig. 3 (a) und (b) jeweils nur beispielhaft dargestellt verändern. So geben die Felder 301 bis 307 die möglichen Funktionen vor. In dem in Fig. 3 (a) dargestellten Beispiel ist durch den Rahmen um das Symbol 306 ausgedrückt, dass diese Funktion mittels der ebenfalls auf der Bedienvorrichtung vorgesehenen Bedienelemente ausgewählt ist und als nächstes ausgeführt werden kann. Fig. 3 (b) zeigt, wie sich das Menü verändert, wenn die Funktion 302 aus Fig. 3 (a) angewählt wurde. Nun befindet sich als Symbol 308 (Fig. 3 (b)) nun nur noch das vorhergehende Symbol 302 (Fig. 3 (a)) im oberen Teil des Menüs. Entsprechend werden den Bedienelementen (wie sie in Fig. 2 mit den Bezugszeichen 22, 23 und 24 bezeichnet sind) die in den Feldern 309, 310 und 311 dargestellten Funktionen zugewiesen, die sich auf spezifische Steuerfunktionen (hier z.B. AUF, AB, STOP) beziehen. Wird eines der anderen Felder 301 bis 307 ausgewählt, dann können die Bedienelemente 22, 23 und 24 der Fig. 2 entsprechend andere zugeordnete Funktionen aufweisen. Diese Art der menügesteuerten Bedienung ermöglicht eine intuitive und damit flexible und universelle Anwendbarkeit der erfindungsgemäßen Bedienvorrichtung.

Es ist dabei vorteilhaft, die Funktionen durch Symbole auf dem Display darzustellen, die als Piktogramme ausgebildet sind. Durch Auswahl geeigneter, allgemein verständlicher Piktogramme kann auf eine ansonsten notwendige Erläuterung in Textform verzichtet werden, bzw. die Erläuterung kann relativ kurz gefasst werden. Hierdurch kann die Bedienvorrichtung im wesentlichen unabhängig von der jeweiligen Landessprache mit einer einheitlichen Bedienung versehen werden.

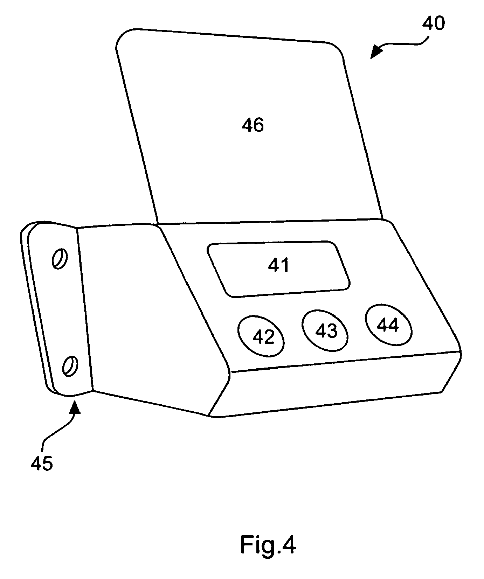

Fig. 4 zeigt eine mögliche körperlich räumliche Ausgestaltung eines erfindungsgemäßen Bedienteils. Erfindungsgemäß kann die Bedienvorrichtung 40 z. B. fest an einer Seite des Trailers installiert sein. Hierfür sind entsprechende Befestigungsmittel 45 vorgesehen. Ebenso können jedoch mehrere derartige Bedienvorrichtungen z. B. im Trailer und auch im Führerhaus des Schleppers vorgesehen sein. Dies ist insbesondere dann sinnvoll, wenn die Steuerungs- und Überwachungsaufgaben in unterschiedlichen Betriebssituation auftreten. Neben einer kompakten Bauweise und einer Schutzklappe 46, um die Bedienvorrichtung vor Beschädigung zu schützen, weist die Bedienvorrichtung gemäß Fig. 4 wieder eine Anzeige 41 und Bedienelemente 42, 43 und 44 auf. Es ist anzumerken, dass die Bedienelemente nicht auf lediglich drei Bedienelemente, wie hier dargestellt, begrenzt sein müssen. Allerdings ergibt sich bei einer geringen Anzahl von Bedienelementen 42 bis 44 häufig eine vorteilhafte einfache Bedienbarkeit. Es kann erfindungsgemäß auch vorgesehen sein, dass die Bedienvorrichtung nicht über ein frei bewegliches Kabel, sondern über eine fest installierte Verdrahtung oder über eine drahtlose Funkverbindung mit dem Anhängerfahrzeug gekoppelt ist.

## Patentansprüche

1. Bedienvorrichtung (20) für Anhängerfahrzeuge mit
a) einem Bedienelement (22) zum Ausführen einer Steuerfunktion des Anhängerfahrzeuges und
b) einer Anzeige (21),
**gekennzeichnet durch** die Merkmale:
c) die Anzeige (21) ist zum Anzeigen einer zur Steuerfunktion korrespondierenden Steuerinformation (310) eingerichtet,
d) ein Bedienelement (22) ist ausgestaltet, um bei Betätigung basierend auf der auf der Anzeige (21) angezeigten Steuerinformation (310) mindestens zwei verschiedene Steuerfunktionen auszuführen,
e) als eine der Steuerfunktionen ist eine manuelle Steuerung der Position einer verbauten Liftachse des Anhängerfahrzeugs vorgesehen.

2. Bedienvorrichtung nach Anspruch 1, **dadurch gekennzeichnet, dass** mindestens zwei unterschiedliche Steuerfunktionen ausführbar sind, wobei die Anzeige (21) eine zu der jeweiligen Steuerfunktion korrespondierende Steuerinformation (310) anzeigt.

3. Bedienvorrichtung nach einem der vorstehenden Ansprüche, **dadurch gekennzeichnet, dass** die ausführbaren Steuerfunktionen basierend auf mit der Bedienvorrichtung gekoppelten Steuerungsvorrichtungen des Anhängerfahrzeuges konfigurierbar sind.

4. Bedienvorrichtung nach einem der vorstehenden Ansprüche, **dadurch gekennzeichnet, dass** die Anzeige (21) zum Anzeigen von Betriebsdaten ausgestaltet ist, welche der Überwachung von Betriebsparametern zugeordnet sind.

5. Bedienvorrichtung nach einem der vorstehenden Ansprüche, **gekennzeichnet durch** weniger als zehn, insbesondere nur drei Bedienelemente (22, 23, 24).

6. Bedienvorrichtung nach einem der vorstehenden Ansprüche, **dadurch gekennzeichnet, dass** eine oder mehrere der nachfolgenden Funktionen vorgesehen sind: Bedienung einer elektronischen Niveauregelung des Anhängerfahrzeugs, eine Steuerung einer Straßenfertigerbremse des Anhängerfahrzeugs und eine Steuerung von Schaltausgängen zur Beleuchtung, insbesondere zur Innenraumbeleuchtung des Anhängerfahrzeugs.

7. Verfahren zum Bedienen eines Anhängerfahrzeugs mit den Schritten:
a) Anzeigen von Steuerinformation (310),
b) Zuordnen einer zur Steuerinformation (310) korrespondierenden Steuerfunktion des Anhängerfahrzeuges zu einem Bedienelement (22),
c) Betätigen eines Bedienelementes (22) zum Ausführen einer ersten Steuerfunktion basierend auf einer ersten angezeigten Steuerinformation (310), und
d) Betätigen des Bedienelementes (22) zum Ausführen einer zweiten Steuerfunktion basierend auf einer zweiten angezeigten Steuerinformation (310), wobei die erste Steuerfunktion und die zweite Steuerfunktion verschieden sind und wobei
e) als eine der Steuerfunktionen eine manuelle Steuerung der Position einer verbauten Liftachse des Anhängerfahrzeugs vorgesehen ist.

## Claims

1. Operator control device (20) for trailer vehicles, having
a) an operator control element (22) for carrying out a control function of the trailer vehicle, and
b) a display (21),
**characterized by** the features:
c) the display (21) is configured to display control information (310) corresponding to the control function,
d) an operator control element (22) is designed to carry out at least two different control functions when activation occurs on the basis of the control information (310) displayed on the display (21), and
e) there is provision for the position of an installed lift axle of the trailer vehicle to be manually controlled as one of the control functions.

2. Operator control device according to Claim 1, **characterized in that** at least two different control functions can be carried out, wherein the display (21) displays control information (310) corresponding to the respective control function.

3. Operator control device according to one of the preceding claims, **characterized in that** the control functions which can be carried out can be configured on the basis of control devices of the trailer vehicle coupled to the operator control device.

4. Operator control device according to one of the preceding claims, **characterized in that** the display (21) is designed to display operational data which are assigned to monitoring operational parameters.

5. Operator control device according to one of the preceding claims, **characterized by** fewer than ten, in particular only three operator control elements (22, 23, 24).

6. Operator control device according to one of the preceding claims, **characterized in that** one or more of the following functions are provided: operator control of an electronic ride level control system of the trailer vehicle, control of a road paver brake of the trailer vehicle and control of switching outputs for the illumination, in particular for the illumination of the interior, of the trailer vehicle.

7. Method for operating a trailer vehicle having the steps:
a) displaying control information (310),
b) assigning a control function, corresponding to the control information (310), of the trailer vehicle to an operator control element (22),
c) activating an operator control element (22) in order to carry out a first control function on the basis of a first displayed control information item (310), and
d) activating the operator control element (22) in order to carry out a second control function on the basis of a second displayed control information item (310), wherein the first control function and the second control function are different, and wherein
e) manual control of the position of an installed lift axle of the trailer vehicle is provided as one of the control functions.

## Revendications

1. Dispositif de contrôle (20) pour remorques, comprenant :
a) un élément de contrôle (22) pour effectuer une fonction de commande de la remorque et
b) un affichage (21),
**caractérisé par** les caractéristiques suivantes :
c) l'affichage (21) est prévu pour afficher une information de commande (310) correspondant à la fonction de commande,
d) un élément de contrôle (22) est prévu pour effectuer au moins deux fonctions de commande différentes lors de l'actionnement, sur la base de l'information de commande (310) affichée sur l'affichage (21),
e) une commande manuelle de la position d'un axe de levage monté de la remorque est prévue en tant que l'une des fonctions de commande.

2. Dispositif de contrôle selon la revendication 1, **caractérisé en ce qu'**au moins deux fonctions de commande différentes peuvent être exécutées, l'affichage (21) affichant une information de commande (310) correspondant à chaque fonction de commande.

3. Dispositif de contrôle selon l'une quelconque des revendications précédentes, **caractérisé en ce que** les fonctions de commande exécutables peuvent être configurées sur la base de dispositifs de commande de la remorque couplés au dispositif de contrôle.

4. Dispositif de contrôle selon l'une quelconque des revendications précédentes, **caractérisé en ce que** l'affichage (21) est configuré pour l'affichage de données de fonctionnement qui sont associées à la surveillance de paramètres de fonctionnement.

5. Dispositif de contrôle selon l'une quelconque des revendications précédentes, **caractérisé par** moins de dix, notamment seulement trois éléments de contrôle (22, 23, 24).

6. Dispositif de contrôle selon l'une quelconque des revendications précédentes, **caractérisé en ce qu'**une ou plusieurs des fonctions suivantes sont prévues : contrôle d'une régulation de niveau électronique de la remorque, commande d'un frein de finisseur routier de la remorque et commande de sorties de commutation pour l'éclairage, notamment pour l'éclairage de l'espace interne de la remorque.

7. Procédé pour le contrôle d'une remorque, comprenant les étapes suivantes :
a) affichage d'une information de commande (310),
b) affectation d'une fonction de commande de la remorque correspondant à l'information de commande (310) à un élément de contrôle (22),
c) actionnement d'un élément de contrôle (22) pour exécuter une première fonction de commande sur la base d'une première information de commande (310) affichée, et
d) actionnement de l'élément de contrôle (22) pour exécuter une deuxième fonction de commande sur la base d'une deuxième information de commande affichée (310), la première fonction de commande et la deuxième fonction de commande étant différentes et où
e) une commande manuelle de la position d'un axe de levage monté de la remorque est prévue en tant que l'une des fonctions de commande.
